# FASCICULE DE BREVET EUROPEEN

(11) **EP 3 900 239 B1**
(45) Date de publication et mention de la délivrance du brevet: **11.02.2026**
(21) Numéro de dépôt: 19839378.7
(22) Date de dépôt: 11.12.2019
(51) Int. Cl.: H04J 14/02

(54) **PROCÉDÉ D'ALLOCATION D'UN CANAL POINT-À-POINT À UN MODULE UTILISATEUR D'UN RÉSEAU DE COMMUNICATION OPTIQUE, PRODUIT PROGRAMME D'ORDINATEUR, MÉDIUM DE STOCKAGE ET DISPOSITIF CORRESPONDANT**
VERFAHREN ZUR ZUORDNUNG EINES PUNKT-ZU-PUNKT-KANALS ZU EINEM BENUTZERMODUL EINES OPTISCHEN KOMMUNIKATIONSNETZES, COMPUTERPROGRAMMPRODUKT, SPEICHERMEDIUM UND ENTSPRECHENDE VORRICHTUNG
METHOD FOR ALLOCATING A POINT-TO-POINT CHANNEL TO A USER MODULE OF AN OPTICAL COMMUNICATION NETWORK, COMPUTER PROGRAM PRODUCT, STORAGE MEDIUM AND CORRESPONDING DEVICE

(30) Priorité: 21.12.2018 FR 1874030
(43) Date de publication de la demande: 27.10.2021
(73) Titulaire: Orange, 92130 Issy-les-Moulineaux (FR)
(72) Inventeur: BOURGART, Fabrice, 92326 CHÂTILLON CEDEX (FR)
(74) Mandataire: Vidon Brevets & Stratégie
(86) Numéro de dépôt international: PCT/FR2019/053010
(87) Numéro de publication internationale: WO 2020/128231

(56) Documents cités:
- EP-A1- 2 753 010
- WO-A1-2015/186194
- WO-A1-2017/104075
- US-B2- 9 479 284

## Description

### 1. DOMAINE DE L'INVENTION

L'invention relève du domaine des réseaux de communications optiques.

Plus particulièrement, l'invention concerne une technique d'allocation de canaux de communication point-à-point à des modules utilisateurs d'un réseau de communication optique.

L'invention s'applique notamment, mais non exclusivement, à de nombreux réseaux optiques, comme par exemple les réseaux optiques passifs ou PON (pour *« Passive Optical Network »* en anglais), et plus particulièrement les réseaux optiques nouvelles générations du type NG-PON ou NG-PON2 (définis selon la norme ITU-T G.989) mettant en œuvre à la fois des canaux point-à-multipoints (« P2MP ») et des canaux point-à-point (« PtP »).

### 2. ARRIÈRE-PLAN TECHNOLOGIQUE

Au cours de ces dernières années, les demandes en bande passante et en qualité de service de plus en plus croissantes par les utilisateurs ont poussé les chercheurs à élaborer de nouvelles architectures et de nouveaux protocoles pour les réseaux de communication optique.

L'architecture PON est une architecture point-à-multipoints passive bien répandue, qui offre un accès optique haut débit à une clientèle essentiellement résidentielle distante (typiquement sur plusieurs dizaines de kilomètres). L'architecture PON se caractérise par l'absence d'équipements actifs entre le central et les habitations desservies, et par un partage de la fibre optique entre plusieurs modules utilisateurs situés dans la partie amont du réseau, au moyen de coupleurs achromatiques et dans sa variante FTTH *(« Fibre To The Home »)* par l'absence d'équipements actifs entre le central et les habitations desservies.

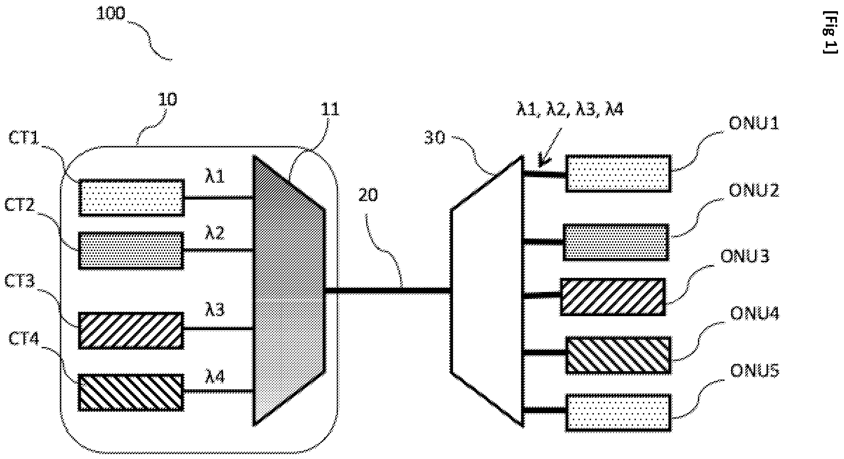

Comme illustré sur la **figure 1****,** un réseau PON 100 comprend, de manière classique, un terminal de ligne optique (ou OLT pour « *Optical Line Terminal »)* 10 localisé au niveau du central (ou CO pour *« Central Office »),* un ensemble de terminaisons optiques (ou CT pour *« Channel Termination »)* CT1 à CT4, un multiplexeur en longueur d'onde 11, une fibre optique 20, un coupleur achromatique 30, ainsi qu'un ensemble de modules utilisateurs distants (ou ONU pour « *Optical Network Unit »)* ONU1 à ONU5. Les terminaisons CT1 à CT4 et le multiplexeur 11 compris dans le terminal 10 sont configurés pour desservir optiquement les modules utilisateurs distants ONU1 à ONUS via la fibre optique 20 partagée passivement via le coupleur achromatique 30. Le réseau PON 100 est configuré pour supporter une pluralité de canaux de communication mis en œuvre entre les terminaisons optiques CT1 à CT4 et les modules utilisateurs ONU1 à ONU5. Chaque canal, caractérisé par une longueur d'onde donnée (respectivement λ1 à λ4), est attribué à une terminaison optique (CT1 à CT4) distincte du terminal 10. Les longueurs d'onde utilisées ici sont toutes distinctes les unes des autres et prédéfinies à l'avance selon le standard utilisé, et chacune est caractéristique d'une terminaison optique donnée du terminal 10. Côté utilisateur, le coupleur achromatique 30 dessert chaque module utilisateur avec l'ensemble des canaux de communication (λ1 à λ4), chaque module utilisateur étant accordable (ou agile) en longueur d'onde.

Le réseau PON 100 met en œuvre un protocole TWDM qui consiste en un multiplexage en longueur d'onde et à répartition dans le temps, permettant de transmettre plusieurs signaux optique sur un seul canal de communication. Ainsi, un même canal de longueur d'onde donné attribué (ou alloué) à une terminaison optique peut être partagé par plusieurs modules utilisateurs, comme c'est le cas de la terminaison optique CT1 qui supporte le canal de longueur d'onde λ1 desservant à la fois les modules utilisateurs ONU1 et ONU5. On parle alors de canal ou de communication point-à-multipoints.

Par comparaison aux architectures point-à-point classiques, le réseau PON permet de réduire le nombre d'équipements requis (central, fibres optiques, etc.) grâce au partage de la fibre optique.

Les prochaines générations de réseaux PON (tel que le standard NG-PON2 par exemple) prévoient d'inclure des canaux de communication point-à-point au sein même de l'architecture de canaux point-à-multipoints d'origine, en vue d'offrir des débits de données dépassant les 10 Gbit/s. Un canal point-à-point est une connexion communicante exclusive entre un module utilisateur et une terminaison optique.

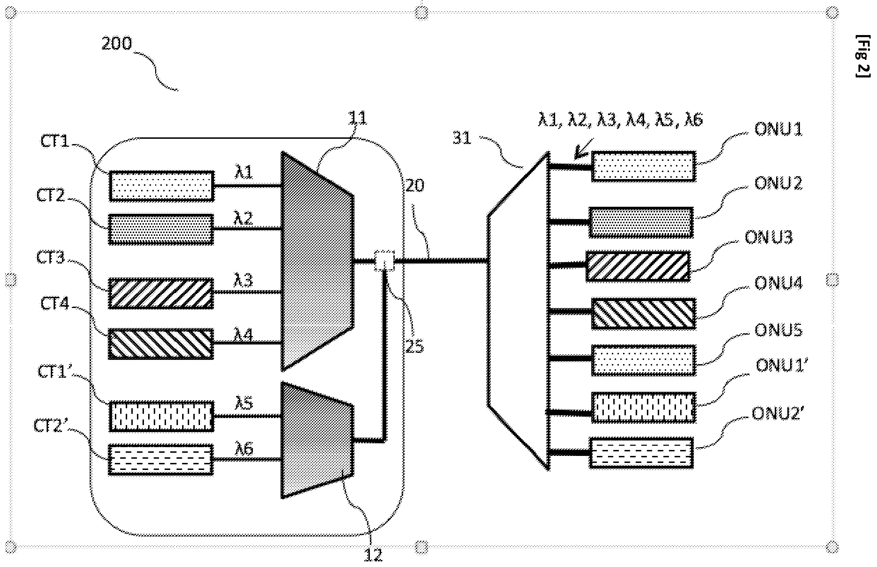

Comme illustré sur la **figure** 2, le réseau 200 comprend non seulement des modules utilisateurs et des terminaisons optiques fonctionnant sur le protocole TWDM (architecture de communication point-à-multipoint), mais également des modules utilisateurs et des terminaisons optiques fonctionnant en point-à-point. Sur la figure 2, les terminaisons optiques point-à-point sont référencées CT1' à CT2'. Les canaux point-à-point de longueur d'onde λ5 et λ6 sont attribués respectivement à CT1' et CT2', lesquels sont connectés à un second multiplexeur 12 en longueur d'onde. Les sorties du premier multiplexeur 11 et du second multiplexeur 12 sont reliées au moyen d'un combineur 25 de longueurs d'onde, lequel est configuré pour combiner les canaux de longueurs d'onde λ1 à λ4 issus du multiplexeur 11 avec les canaux de longueurs d'onde λ5 et λ6 issus du multiplexeur 12 dans la fibre optique 20. A l'autre bout de la fibre optique 20 est connecté un coupleur achromatique 31 qui dessert non seulement les modules utilisateurs point-à-multipoints ONU1 à ONU5 mais également les modules utilisateurs point-à-point ONU1' à ONU2'. Chaque module utilisateur ONU1' à ONU2' est associé à l'ensemble des canaux de communication (λ1 à λ6) et est accordable (ou agile) en longueur d'onde.

Toutefois, s'il existe pour les réseaux PON achromatiques des protocoles point-à-multipoints permettant de gérer de manière inhérente les collisions de données, comme celles pouvant intervenir dans le sens des communications montantes (c'est-à-dire d'un module utilisateur ONU vers une terminaison optique CT), ce n'est pas le cas pour les architectures point-à-point existantes. On parle de collision lorsqu'au moins deux paquets de données optiques empruntent la même longueur d'onde et souhaitent accéder au même équipement au même moment.

Ainsi, lorsqu'un module utilisateur requiert l'établissement d'une communication point-à-point (par exemple lorsqu'il s'agit d'un nouveau module utilisateur introduit dans le réseau), celui-ci risque (du fait de l'inexistence d'un protocole de gestion de collisions adapté à ce type particulier de canal de communication) d'émettre de manière intempestive sur un canal point-à-point déjà utilisé par un autre module utilisateur point-à-point, ce qui serait source de conflits.

Une solution connue offrant la possibilité d'utiliser de canaux de communication point-à-point dans un réseau PON avec gestion des collisions, repose sur la technologie des systèmes optiques WDM (pour *« Wavelength Division Multiplexing »),* aussi couramment appelés réseaux WDM-PON. Ces derniers reposent sur une transmission de données sélective en longueur d'onde. Cette solution consiste à utiliser un canal point-à-point de longueur d'onde distincte par module utilisateur, chacun disposant alors d'un canal point-à-point dédié jusqu'au terminal de ligne optique. Cette technologie WDM-PON impose l'utilisation d'un démultiplexeur en longueur d'onde chromatique côté utilisateur, ce qui implique l'utilisation d'un canal de longueur d'onde distincte et dédié pour chaque utilisateur du réseau. En d'autres termes, une telle solution repose sur une allocation prédéfinie des canaux point-à-point aux différents modules utilisateurs (on parle aussi de colorisation prédéfinie des modules utilisateurs), ce qui n'est pas optimal. De plus, une telle solution suppose de s'affranchir de l'architecture PON achromatique discutée plus haut (et donc de l'utilisation d'un coupleur achromatique) ce qui serait problématique en raison des parcs d'infrastructure PON achromatique déjà installés. Le document de l'état de l'art WO2015/186194 A1 divulgue une méthode d'allocation de longueurs d'onde dans une réseau WDM-PON.

Ainsi, il pourrait être particulièrement intéressant de proposer une technique d'allocation de canaux point-points dans un réseau PON, qui permette d'éviter la survenance de collisions, ledit réseau PON reposant sur une architecture de communication point-multipoint.

### 3. EXPOSÉ DE L'INVENTION

Dans un mode de réalisation particulier de l'invention, il est proposé un procédé d'allocation d'un canal point-à-point à un module utilisateur d'un réseau de communication optique, ledit réseau comprenant des modules utilisateurs et des terminaisons optiques, et supportant des canaux point-à-multi-points et une pluralité de canaux point-à-point, un même canal point-à-point étant attribué à une seule terminaison optique, ledit procédé étant mis en œuvre pour un module utilisateur dit module utilisateur demandeur, et comprenant les étapes suivantes :
- détection d'un signal de disponibilité prédéterminé véhiculé par un canal point-à-point de ladite pluralité de canaux point-à-point ;
- allocation audit module utilisateur demandeur du canal point-à-point sur lequel est véhiculé ledit signal de disponibilité prédéterminé, dit canal point-à-point disponible.

L'étape de détection comprend de plus une étape de vérification, sur chaque canal point-à-point de ladite pluralité de canaux point-à-point, que le signal de disponibilité prédéterminé est détecté, et en cas de vérification positive pour un seul canal point-à-point de ladite pluralité, allocation dudit seul canal point-à-point audit module utilisateur demandeur; en cas de vérification positive pour un ensemble de canaux point-à-point de ladite pluralité, allocation d'un canal point-à-point audit module utilisateur demandeur sélectionné parmi ledit ensemble de canaux point-à-point, en fonction d'un critère de qualité de communication prédéterminé.

Ainsi, la présente invention repose sur une nouvelle approche consistant à trouver un canal point-à-point disponible parmi ladite pluralité de canaux point-à-point d'un réseau de communication optique, par simple analyse des signaux véhiculés par les canaux point-à-point depuis les terminaisons optiques. Ainsi, la présente invention vise à allouer à un module utilisateur du réseau optique un canal point-à-point disponible, parmi la pluralité de canaux point-à-point, sur détection d'un signal de disponibilité prédéterminé provenant d'une terminaison optique disponible. Cette approche évite ainsi une allocation de canaux point-à-point qui seraient indisponibles, empêchant ainsi la survenance de collisions de données optiques sur un même canal. Cette approche présente aussi l'avantage de convenir à des réseaux de distribution optiques partageant, en les véhiculant sur au moins une même fibre optique à un point donné, à la fois des canaux point-à-multipoints et des canaux point-à-point.

Selon une mise en œuvre particulière du procédé, l'étape de détection comprend une étape vérification que le signal de disponibilité prédéterminé est détecté sur un premier canal point-à-point parmi ladite pluralité de canaux point-à-point, et :
- en cas de vérification positive, allocation du premier canal point-à-point audit module utilisateur demandeur;
- en cas de vérification négative, vérification que le signal de disponibilité prédéterminé est détecté sur un deuxième canal point-à-point parmi ladite pluralité de canaux point-à-point.

Ainsi, en évitant de réaliser un balayage exhaustif sur l'ensemble des canaux point-à-point, la consommation en énergie des modules utilisateurs s'en trouve réduite.

Un balayage exhaustif des canaux point-à-point du réseau permet d'offrir la possibilité d'allouer un canal point-à-point ayant un niveau de qualité de communication suffisant. Dans une implémentation particulière, c'est le canal point-à-point présentant le niveau de qualité de communication le plus élevé dudit ensemble qui est alloué au module utilisateur demandeur.

Selon un aspect particulier de l'invention, l'étape de détection est déclenchée sur apparition d'une condition appartenant au groupe comprenant :
- détection d'une demande d'allocation d'un canal point-à-point ;
- détection d'un dysfonctionnement d'une terminaison optique ;
- détection d'une maintenance d'une terminaison optique ;
- introduction d'un nouveau module utilisateur dans le réseau ;
- introduction d'une nouvelle terminaison optique dans le réseau ;
- détection d'une demande d'un changement de canal point-à-point ;
- détection d'un niveau de qualité de communication inférieur à un seuil prédéterminé entre un module utilisateur et une terminaison optique du réseau impliqués dans un canal point-à-point de ladite pluralité.

Dans le dernier cas, cela permet de procéder à une réallocation d'un canal point-à-point à un module utilisateur impliqué dans un canal point-à-point de qualité de communication non suffisante.

Selon un aspect particulier de l'invention, le procédé comprend en outre, après l'étape d'allocation du canal point-à-point disponible, une étape de transmission sur le canal point-à-point disponible d'une requête d'utilisation du canal point-à-point disponible, à destination de la terminaison optique à laquelle est attribué ledit canal point-à-point disponible.

De cette façon, la terminaison optique concernée par l'allocation du canal point-à-point disponible est informée de l'intention du module utilisateur demandeur d'établir une communication point-à-point avec lui via ce canal.

Selon un aspect particulier de l'invention, une entité interne au module utilisateur demandeur ou externe au module utilisateur demandeur effectue l'étape d'allocation d'un canal point-à-point.

Ainsi, l'allocation du canal point-à-point peut être mise en œuvre soit par le module utilisateur demandeur de l'allocation lui-même, soit par un dispositif externe dédié.

Dans un autre mode de réalisation de l'invention, il est proposé un procédé d'allocation d'un canal point-à-point à un module utilisateur d'un réseau de communication optique, ledit réseau comprenant des modules utilisateurs et des terminaisons optiques, et supportant des canaux point-à-multi-points et une pluralité de canaux point-à-point, un même canal point-à-point étant attribué à une seule terminaison optique, ledit procédé étant mis en œuvre pour chaque terminaison optique de ladite pluralité, disponible pour une connexion optique point-à-point, et comprenant les étapes suivantes:
- émission d'un signal de disponibilité prédéterminé sur le canal point-à-point attribué à ladite terminaison optique disponible, dit canal point-à-point disponible, vers les modules utilisateurs ; et
- mise en attente d'une requête d'utilisation du canal point-à-point disponible, provenant d'un module utilisateur, dit module utilisateur demandeur. Le signal de disponibilité prédéterminé comprend une information appartenant au groupe comprenant :
   - une information représentative d'un numéro de référence associé au canal point-à-point disponible;
   - une information représentative d'une longueur d'onde associée au canal point-à-point disponible;
   - une information représentative d'une fréquence associée au canal point-à-point disponible;
   - une information représentative d'une vitesse de modulation associée au canal point-à-point disponible.

Du côté de la terminaison optique, l'émission du signal de disponibilité signifie au module utilisateur ayant reçu ce signal que le canal point-à-point concerné est disponible et qu'une allocation de ce canal point-à-point à ce module utilisateur est possible.

Selon une caractéristique particulière, le procédé comprend en outre les étapes suivantes, sur réception de la requête d'utilisation du canal point-à-point disponible :
- arrêt de l'émission du signal de disponibilité prédéterminé sur le canal point-à-point disponible ;
- vérification de la faisabilité de l'établissement d'une communication point-à-point sur le canal point-à-point disponible entre ledit module utilisateur demandeur et ladite terminaison optique disponible.

L'arrêt de l'émission du signal de disponibilité prédéterminé par la terminaison optique signifie qu'elle n'est plus disponible et qu'elle initie l'établissement d'une communication point-à-point sur le canal concerné.

Selon une caractéristique particulière, le procédé comprend en outre les étapes suivantes :
- en cas de vérification positive, établissement d'une communication point-à-point sur le canal point-à-point disponible entre ledit module utilisateur demandeur et ladite terminaison optique disponible ;
- en cas de vérification négative, réémission du signal de disponibilité prédéterminé sur le canal point-à-point disponible.

Ainsi, en cas de réussite, la terminaison optique établie de manière effective une communication point-à-point sur le canal concerné. En cas d'échec, la réémission du signal de disponibilité prédéterminé signifie que l'établissement d'une communication point-à-point n'a pas abouti et que la terminaison optique concernée reste disponible.

Selon une mise en œuvre particulière de l'invention, le signal de disponibilité prédéterminé est émis de façon continue. Une telle mise en œuvre permet d'assurer que le module utilisateur demandeur d'une allocation d'un canal point-à-point reçoit le signal de disponibilité prédéterminé.

Selon une variante de mise en œuvre, le signal de disponibilité prédéterminé est émis de façon discontinue. Une telle variante permet de réduire la consommation en énergie de la terminaison optique.

Dans un autre mode de réalisation de l'invention, il est proposé un produit programme d'ordinateur qui comprend des instructions de code de programme pour la mise en œuvre du procédé précité (dans l'un quelconque de ses différents modes de réalisation), lorsque ledit programme est exécuté sur un ordinateur.

Dans un autre mode de réalisation de l'invention, il est proposé un médium de stockage lisible par ordinateur et non transitoire, stockant un programme d'ordinateur comprenant un jeu d'instructions exécutables par un ordinateur pour mettre en œuvre le procédé précité (dans l'un quelconque de ses différents modes de réalisation).

Dans un autre mode de réalisation de l'invention, il est proposé un dispositif d'allocation d'un canal point-à-point à un module utilisateur d'un réseau de communication optique, ledit réseau comprenant des modules utilisateurs et des terminaisons optiques, et supportant des canaux point-à-multi-points et une pluralité de canaux point-à-point, un même canal point-à-point étant attribué à une seule terminaison optique, ledit dispositif comprenant, pour un module utilisateur dit module utilisateur demandeur:
- des moyens de détection d'un signal de disponibilité prédéterminé véhiculé par un canal point-à-point de ladite pluralité de canaux point-à-point ;
- des moyens d'allocation audit module utilisateur demandeur du canal point-à-point sur lequel est véhiculé ledit signal de disponibilité prédéterminé, dit canal point-à-point disponible. Les moyens de détection comprenant de plus des moyens de vérification, sur chaque canal point-à-point de ladite pluralité de canaux point-à-point, configurés tels que le signal de disponibilité prédéterminé est détecté, et en cas de vérification positive pour un seul canal point-à-point de ladite pluralité, allocation dudit seul canal point-à-point audit module utilisateur demandeur; en cas de vérification positive pour un ensemble de canaux point-à-point de ladite pluralité, allocation d'un canal point-à-point audit module utilisateur demandeur sélectionné parmi ledit ensemble de canaux point-à-point, en fonction d'un critère de qualité de communication prédéterminé.

Avantageusement, le dispositif d'allocation comprend des moyens de mise en œuvre des étapes de détection et d'allocation qu'il effectue dans le procédé d'allocation tel que décrit précédemment, dans l'un quelconque de ses différents modes de réalisation.

Dans un autre mode de réalisation de l'invention, il est proposé une terminaison optique comprise dans un réseau de communication optique, comprenant des modules utilisateurs et des terminaisons optiques, et supportant des canaux point-à-multi-points et une pluralité de canaux point-à-point, un même canal point-à-point étant attribué à une seule terminaison optique, ladite terminaison comprenant :
- des moyen d'émission d'un signal de disponibilité prédéterminé sur le canal point-à-point attribué à ladite terminaison optique disponible, dit canal point-à-point disponible, vers les modules utilisateurs ; et
- des moyen de mise en attente d'une requête d'utilisation du canal point-à-point disponible provenant d'un module utilisateur, dit module utilisateur demandeur.

Le signal de disponibilité prédéterminé comprend une information appartenant au groupe comprenant:
- une information représentative d'un numéro de référence associé au canal point-à-point disponible;
- une information représentative d'une longueur d'onde associée au canal point-à-point disponible;
- une information représentative d'une fréquence associée au canal point-à-point disponible;
- une information représentative d'une vitesse de modulation associée au canal point-à-point disponible.

Avantageusement, la terminaison optique comprend des moyens de mise en œuvre des étapes d'émission et de mise en attente qu'il effectue dans le procédé d'allocation tel que décrit précédemment, dans l'un quelconque de ses différents modes de réalisation.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
**[****Fig. 1****],** déjà décrite en relation avec l'art antérieur, représente de façon schématique un réseau de communication PON TWDM classique ;
**[****Fig. 2****],** déjà décrite en relation avec l'art antérieur, représente de façon schématique un réseau de communication PON reposant à la fois sur un mode de transmission point-à-multipoints (TWDM) et un mode de transmission point-à-point (WDM) ;
**[****Fig. 3****]** présente un schéma simplifié d'un réseau de communication optique dans lequel est mis en œuvre le procédé selon un mode de réalisation particulier de l'invention ;
**[****Fig. 4****]** est un organigramme d'un mode de réalisation particulier du procédé selon l'invention ;
**[****Fig. 5****]** présente un diagramme d'évènements montrant de manière générique le déroulement du procédé entre un module utilisateur et une terminaison optique du réseau ;
**[****Fig. 6****]** présente un exemple de structure d'un signal de disponibilité prédéterminé utilisé dans le cadre l'invention ;
**[****Fig. 7****]** présente la structure d'un serveur d'application selon un mode de réalisation particulier de l'invention.

### 5. DESCRIPTION DÉTAILLÉE

Sur toutes les figures du présent document, les éléments et étapes identiques sont désignés par une même référence numérique.

Dans la suite de la description, on considère un exemple de mise en œuvre de l'invention dans un réseau d'accès optique de type PON. L'invention ne se limite bien sûr pas à cet exemple particulier, et peut s'appliquer à tout réseau de communication optique mettant en œuvre une pluralité de canaux point-à-point.

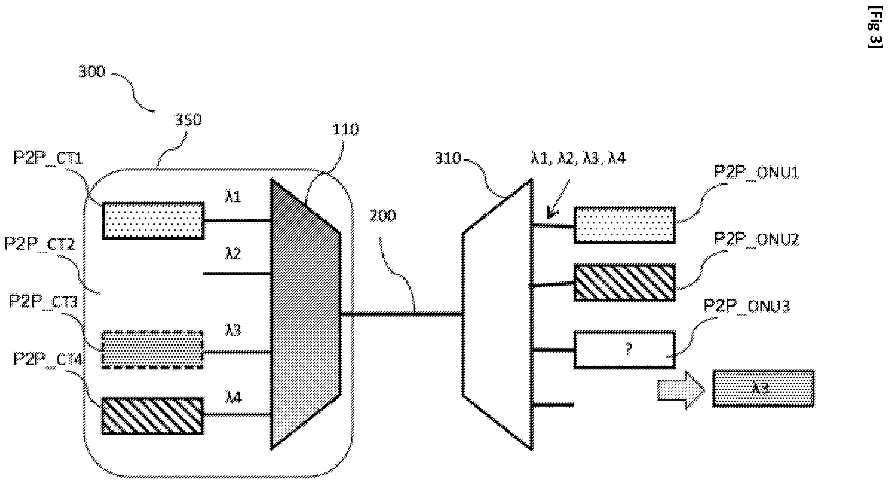

La **figure 3** présente un exemple schématique d'un réseau de communication optique 300 dans lequel est mis en œuvre le procédé d'allocation selon un mode de réalisation particulier de l'invention. Il peut s'agir par exemple d'un réseau PON reposant à la fois sur un mode de transmission point-à-multipoints (TWDM) et un mode de transmission point-à-point (WDM). Seule la partie du réseau relative aux communications point-à-point est représentée ici sur la figure, pour en simplifier la description.

Un tel réseau optique 300 comprend trois terminaisons optiques P2P_CT1, P2P_CT3, P2P_CT4, un multiplexeur en longueur d'onde 110, une fibre optique 200, un coupleur achromatique 310, ainsi que trois modules utilisateurs P2P_ONU1, P2P_ONU2, P2P_ONU3. Les terminaisons optiques P2P_CT1, P2P_CT3, P2P_CT4 et le multiplexeur 110 compris dans le terminal 350 sont configurées pour desservir optiquement les modules utilisateurs distants au moyen de la fibre optique 200 et via le coupleur achromatique 310. Le réseau optique 300 est configuré ici pour supporter un ensemble de quatre canaux optiques point-à-point, de longueurs d'onde λ1, λ2, λ3 et λ4, caractéristiques des terminaisons optiques P2P_CT1, P2P_CT2, P2P_CT3, P2P_CT4 respectivement.

De manière générale, un canal point-à-point distinct est attribué à chaque terminaison optique du réseau et chaque module utilisateur est associé à l'ensemble (ou à un sous-ensemble) des canaux point-à-point. Ainsi, on entend par « attribué » le fait que le canal considéré est associé de manière définitive, c'est-à-dire alloué à la terminaison optique pour l'établissement d'une communication point-à-point donnée, et par « associé » le fait que le canal considéré est provisoirement associé au module optique pour réaliser la phase de détection d'un canal point-à-point disponible avant la phase d'allocation à proprement parler. En effet, afin d'éviter d'utiliser le même terme « allocation » à la fois pour les terminaisons optiques et les modules utilisateurs, le terme « attribution » est utilisé ici spécifiquement pour les terminaisons optiques, et le terme « allocation » est utilisé ici spécifiquement pour les modules utilisateurs point-à-point.

On considère dans l'exemple particulier illustré ici que les terminaisons optiques P2P_CT1 et P2P_CT4 sont en service avec les modules utilisateur P2P_ONU1 et P2P_ONU2 respectivement. Une terminaison optique est dite en service lorsque celle-ci est déjà impliquée dans une communication point-à-point avec un module utilisateur point-à-point via le canal point-à-point qui lui a précédemment été attribué, et que par conséquent, elle se trouve dans un état d'indisponibilité pour l'allocation de son canal point-à-point à un autre module utilisateur point-à-point.

La terminaison optique P2P_CT2 quant à elle n'est pas connectée au multiplexeur 110 ; elle est donc considérée également comme indisponible. Par contre, la terminaison optique P2P_CT3 est disponible. Ainsi, le canal point-à-point de longueur d'onde λ3 qui lui est attribué est un canal point-à-point considéré comme disponible et allouable à un module utilisateur en vue d'établir une communication point-à-point via ce canal.

Il est entendu que le nombre de modules utilisateurs et de terminaisons optiques (et donc le nombre de canaux point-à-point) discutés ici est volontairement limité, à titre de descriptif purement pédagogique, de manière à ne pas surcharger la figure et la description associée. Un nombre plus important d'équipements peut en effet être envisagé sans sortir du cadre de l'invention.

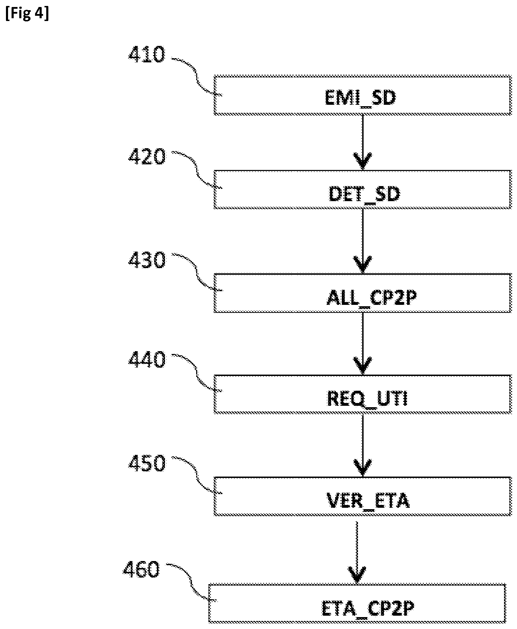

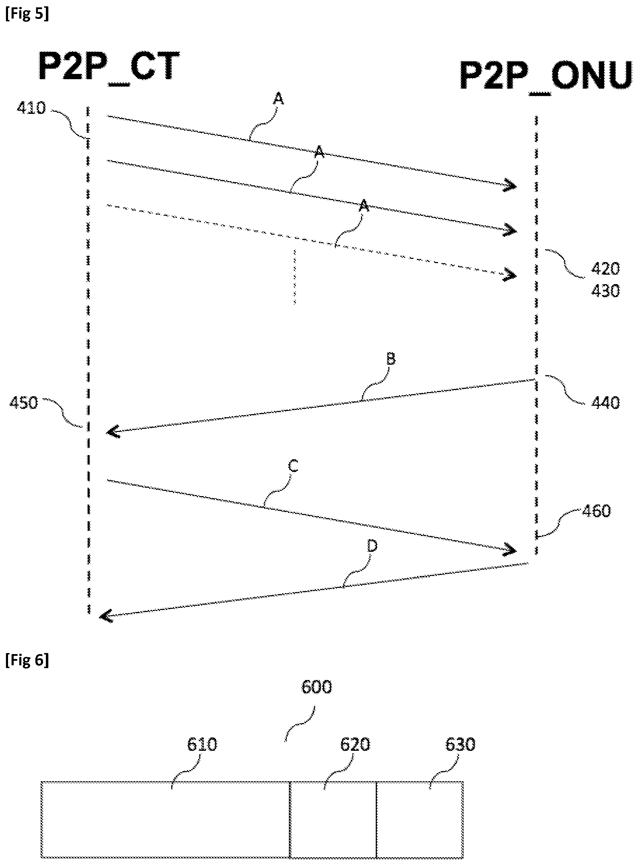

La **figure 4** représente un organigramme d'un mode de réalisation particulier du procédé d'allocation selon l'invention. Cet organigramme comprend les étapes principales de mise en œuvre du procédé, qui sont appliquées à chaque fois qu'une demande d'allocation d'un canal point-à-point à un module utilisateur du réseau est initiée. Certaines de ces étapes sont effectuées par une terminaison optique dite terminaison disponible du réseau et d'autres sont effectuées par un module utilisateur, dit demandeur du réseau. Pour faciliter la compréhension de la présente invention, ces étapes sont également représentées sur la **figure 5** sous la forme d'un diagramme d'évènements illustrant le déroulement du procédé.

Comme discuté plus en détails ci-après, le procédé repose sur une nouvelle approche consistant à trouver un canal point-à-point disponible parmi l'ensemble des canaux point-à-point du réseau sur détection d'un signal de disponibilité prédéterminé véhiculé par ce canal.

Le procédé est initialisé sur demande d'allocation à un module utilisateur d'un canal point-à-point, parmi l'ensemble des canaux point-à-point supportés par le réseau 300. On considère ici l'introduction d'un nouveau module utilisateur P2P_ONU3 dans le réseau 300. Ce nouveau module utilisateur P2P_ONU3 est optiquement connecté au coupleur achromatique 310 de sorte qu'il est associé à l'ensemble des canaux point-à-point du réseau, de longueurs d'onde λ1, λ2, λ3 et λ4 (mais non encore alloué à l'un de ces canaux point-à-point).

A l'étape 410 (notée « EMI_SD »), pour l'allocation d'un canal point-à-point au module utilisateur P2P_ONU3, la terminaison optique P2P_CT3 disponible du terminal 350 procède à l'émission d'un signal de disponibilité prédéterminé sur le canal point-à-point qui lui est attribué, c'est-à-dire le canal de longueur d'onde λ3. Selon une implémentation particulière, le signal de disponibilité prédéterminé est émis de façon continue et présente une signature optique particulière reconnaissable par tous les modules utilisateurs du réseau. Le signal de disponibilité prédéterminé est matérialisé par les flèches A sur la figure 5 et sa structure est plus amplement détaillé ci-après en relation avec la figure 6.

A noter que si plusieurs terminaisons optiques du réseau sont disponibles, chacune de ces terminaisons optiques émet le signal de disponibilité prédéterminé via le canal pont-à-point qui lui est attribué.

Selon une variante d'implémentation, le signal de disponibilité prédéterminé est émis par la terminaison optique de façon discontinue, selon un séquencement prédéfini. Ceci permet à la terminaison optique concernée par l'émission de réduire sa consommation en énergie.

Quel que soit le mode d'émission mis en œuvre par la terminaison optique (continu ou discontinu), le signal de disponibilité est émis tant qu'aucune requête d'utilisation n'est reçue d'un module utilisateur (tel que décrit plus loin en relation avec l'étape 440). La terminaison optique P2P_CT3 est donc mise en attente d'une requête d'utilisation d'un canal point-à-point provenant d'un module utilisateur ayant reçu le signal de disponibilité prédéterminé.

A l'étape 420 (notée « DET_SD »), le module utilisateur P2P_ONU3 demandeur d'une allocation procède à un balayage (ou sondage) séquentiel des différents canaux point-à-point qui lui sont associés, en vue de détecter le signal de disponibilité prédéterminé qui serait véhiculé par un (ou plusieurs) cana(aux) point-à-point(s) du réseau 300. Le module utilisateur P2P_ONU3 utilise, pour cette étape, une configuration en mode « écoute » ou « réception ». Pour ce faire, le module utilisateur P2P_ONU3 se connecte à (ou se positionne sur) un premier canal pont-à-point et vérifie si un signal de disponibilité est détecté via ce premier canal pont-à-point. Le module utilisateur P2P_ONU3 possède pour cela une table locale, stockée dans sa mémoire, comprenant par exemple la liste de tous les canaux point-à-point du réseau 300 auxquels il est associé (à savoir les canaux de longueurs d'onde λ1, λ2, λ3 et λ4). Le module utilisateur P2P_ONU3 se connecte alors (en mode réception uniquement) au (ou se positionne sur le) premier canal pont-à-point de la liste, soit le canal de longueur d'onde λ1 et vérifie qu'un signal de disponibilité est véhiculé par ce canal. Or dans le présent exemple, le signal de disponibilité émis par la terminaison P2P_CT3 n'est pas véhiculé par le canal de longueur d'onde λ1. Bien que des communications point-à-point sont échangées sur ce premier canal (on rappelle que P2P_CT1 et P2P_ONU1 sont en service), aucun signal de disponibilité n'est détecté par le module utilisateur P2P_ONU3 sur ce premier canal. Par conséquent, le module utilisateur P2P_ONU3 stoppe sa connexion avec le canal de longueur d'onde λ1 et se connecte (en mode réception uniquement) au (ou se positionne sur le) deuxième canal point-à-point de la liste, soit le canal de longueur d'onde λ2, et vérifie si le signal de disponibilité est véhiculé par ce deuxième canal. Or aucun signal optique (signal de disponibilité y compris) n'est détecté sur ce deuxième canal (la terminaison P2P_CT2 n'étant pas connectée). Le module utilisateur P2P_ONU3 stoppe alors sa connexion avec le canal de longueur d'onde λ2 et se connecte (en mode réception uniquement) au (ou se positionne sur le) troisième canal point-à-point de la liste, soit le canal de longueur d'onde λ3. Le module utilisateur procède à un sondage exhaustif de tous les canaux point-à-point du réseau et vérifie si un signal de disponibilité prédéterminé est détecté pour chaque canal point-à-point sondé. Deux cas peuvent alors se présenter. En cas de vérification positive pour un seul et unique canal point-à-point, ce seul canal point-à-point est alloué au module utilisateur. En cas de vérification positive pour un ensemble de canaux point-à-point, un canal point-à-point sélectionné parmi ledit ensemble de canaux point-à-point, en fonction d'un critère de qualité de communication prédéterminé (par exemple le canal point-à-point présentant un niveau de qualité de communication point-à-point le plus élevé dudit ensemble) est alloué au module utilisateur.

Il convient de noter également que les étapes 410 et 420 peuvent être activées soient séquentiellement, c'est-à-dire l'étape d'émission 410 par la terminaison optique puis l'étape de détection par le module utilisateur, ou bien elles peuvent être activées simultanément.

A l'étape 430 (notée « ALL_CP2P »), le module utilisateur P2P_ONU3 procède alors à l'allocation du canal point-à-point de longueur d'onde λ3 (canal disponible sur lequel est véhiculé le signal de disponibilité). Dans cet exemple, l'allocation est réalisée par configuration du transmetteur interne au module utilisateur P2P_ONU3 sur la longueur d'onde λ3 en vue de permettre une communication sur le canal point-à-point de longueur d'onde λ3.

A l'étape 440 (notée « REQ_UTI »), le module utilisateur P2P_ONU3 transmet alors sur le canal point-à-point de longueur d'onde λ3 alloué une requête d'utilisation de ce canal point-à-point λ3 à destination de la terminaison optique P2P_CT3. Cette étape vise à informer la terminaison optique concernée par le canal point-à-point disponible (P2P_CT3) de l'intention du module utilisateur demandeur (P2P_ONU3) d'établir une communication point-à-point avec lui via ce canal.

La requête d'utilisation est matérialisée par la flèche B sur la figure 5.

A noter que lorsque le module utilisateur P2P_ONU3 détecte le signal de disponibilité sur le canal point-à-point λ3, la longueur d'onde sur laquelle doit s'accorder le module utilisateur P2P_ONU3 pour transmettre la requête d'utilisation sur ce canal point-à-point λ3 est déterminée soit de manière implicite par reconnaissance du canal point-à-point λ3 sur lequel est véhiculé le signal de disponibilité (longueur d'onde prédéfinie dans le standard), soit de manière explicite au moyen des informations contenues dans le signal de disponibilité (dont le principe est détaillé plus loin en relation avec la figure 6).

A l'étape 450 (notée « REQ_UTI »), sur réception de la requête d'utilisation du canal point-à-point λ3, la terminaison optique P2P_CT3 stoppe l'émission du signal de disponibilité prédéterminé initiée à l'étape 410 et entame une procédure de vérification de la faisabilité de l'établissement d'une communication point-à-point avec le module utilisateur P2P_ONU3. L'arrêt de l'émission du signal de disponibilité prédéterminé signifie que la terminaison optique P2P_CT3 n'est plus disponible.

La procédure de vérification de la faisabilité de l'établissement d'une communication point-à-point consiste en un échange d'une ou plusieurs requêtes entre la terminaison optique P2P_CT3 et le module utilisateur P2P_ONU3 en utilisant le canal point-à-point λ3 (matérialisées à titre d'exemple par les flèches C et D sur la figure 5). Cette procédure est basée sur un protocole prédéfini de démarrage d'une communication point-à-point et a pour objet de stabiliser la connectivité point-à-point entre les deux équipements

En cas de vérification positive (de la faisabilité de l'établissement d'une communication point-à-point avec le module utilisateur P2P_ONU3), l'allocation du canal point-à-point λ3 au module utilisateur P2P_ONU3 est considérée comme réussie et une communication point-à-point sur le canal point-à-point λ3 est établie (étape 460 (notée « ETA_CP2P »). Le canal point-à-point λ3 est alors considéré comme indisponible.

En cas de vérification négative (de la faisabilité de l'établissement d'une communication point-à-point avec le module utilisateur P2P_ONU3), l'algorithme retourne à l'étape 410 du procédé et la terminaison optique P2P_CT3 procède à nouveau à l'émission du signal de disponibilité prédéterminé sur le canal point-à-point λ3. Au préalable, la terminaison optique P2P_CT3 peut envoyer au module utilisateur P2P_ONU3 une requête d'échec d'allocation du canal-point-à-point λ3, afin de l'informer que l'allocation du canal point-à-point λ3 n'a finalement pas aboutie et que ce canal devient à nouveau disponible.

Le procédé de détermination décrit ci-dessus est initialisé sur demande d'allocation d'un canal point-à-point disponible d'un module utilisateur nouvellement introduit dans le réseau. Il s'agit ici d'un exemple particulier d'application et le procédé peut être mis en œuvre sur apparition ou survenance d'un des évènements suivants (liste non exhaustive) :
- détection d'un dysfonctionnement d'une terminaison optique ;
- maintenance préprogrammée d'une terminaison optique ;
- introduction d'un nouveau module utilisateur dans le réseau ;
- introduction d'une nouvelle terminaison optique dans le réseau ;
- détection d'une demande d'un changement de canal point-à-point ;
- détection d'un niveau de qualité de communication inférieur à un seuil prédéterminé entre un module utilisateur et une terminaison optique du réseau impliqués dans une communication point-à-point.

La demande d'allocation d'un canal point-à-point disponible peut être initiée par une terminaison optique ou par un module utilisateur du terminal ou encore par un autre équipement tel que par exemple par un module gestionnaire du réseau 300 (indépendamment des modules utilisateurs ou des terminaisons optiques).

La **figure** 6 illustre un exemple schématique d'un signal de disponibilité 600 conforme à la présente invention. Le signal de disponibilité 600 comprend un champ en-tête 610, un champ de données utiles 620 (codé sur 32 bits par exemple) et un champ de protection 630. Le champ en-tête 610 est codé par exemple sur 32 bits dans une modulation du type NRZ (pour « non-return-to-zero » en anglais), et contient un identifiant de la terminaison optique émettrice du signal de disponibilité et des informations représentatives du type du signal véhiculé ici, à savoir un signal de disponibilité. Le champ de données utiles 620 comprend des informations relatives au canal point-à-point disponible sur lequel le signal de disponibilité est véhiculé, à savoir la longueur d'onde associée au canal point-à-point concerné ou la fréquence associée au canal point-à-point concerné ou le numéro de référence du canal point-à-point concerné ou encore la vitesse de modulation associée au canal point-à-point concerné. Le champ de protection 630 contient les données nécessaires à l'application d'un codage de protection contre les erreurs des champs d'en-tête 610 et de données utiles 620 à l'aide d'un code correcteur d'erreur.

Le signal de disponibilité selon l'invention peut être transmis par exemple sous la forme d'un signal d'horloge à basse fréquence (typiquement de l'ordre de 1 MHz) dont la signature permet de le différentier des autres signaux connus transmis sur le réseau 300.

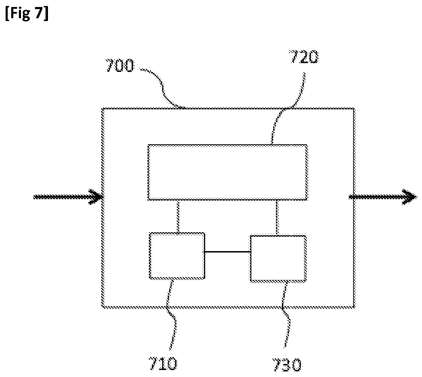

La **figure 7** présente la structure simplifiée d'un dispositif 700 mettant en œuvre le procédé d'allocation selon l'invention (par exemple le mode de réalisation particulier décrit ci-dessus en relation avec les figures 4 à 6). Ce dispositif 700 comprend une mémoire vive 730 (par exemple une mémoire RAM), une unité de traitement 710, équipée par exemple d'un processeur, et pilotée par un programme d'ordinateur stocké dans une mémoire morte 720 (par exemple une mémoire ROM ou un disque dur). A l'initialisation, les instructions de code du programme d'ordinateur sont par exemple chargées dans la mémoire vive 730 avant d'être exécutées par le processeur de l'unité de traitement 710. Un tel programme d'ordinateur, s'il est exécuté par une entité intelligente interne au module utilisateur, permet l'exécution d'une partie des étapes de l'algorithme de figure 4 décrite ci-dessus (étapes 420, 430, 440, 460), ou s'il est exécuté par une terminaison optique, de l'autre partie des étapes de l'algorithme de figure 4 décrite ci-dessus (410, 450).

Dans une variante de réalisation, on peut envisager que ce soit une entité intelligente externe au module utilisateur et à la terminaison optique qui se charge d'effectuer l'étape d'allocation d'un canal point-à-point au module utilisateur concerné. Plus particulièrement, on pourrait envisager que c'est cette entité externe (par exemple localisée dans le central CO) qui initie l'algorithme de la figure 6 et envoie des commandes d'exécution des étapes dédiées à la terminaison optique et au module utilisateur respectivement, selon le principe décrit ci-dessus.

Cette figure 7 illustre seulement une manière particulière, parmi plusieurs possibles, de réaliser les différents algorithmes détaillés ci-dessus, en relation avec la figure 4. En effet, la technique de l'invention se réalise indifféremment :
- sur une machine de calcul reprogrammable (un ordinateur PC, un processeur DSP ou un microcontrôleur) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé d'allocation d'un canal point-à-point à un module utilisateur d'un réseau de communication optique (300), ledit réseau comprenant des modules utilisateurs (P2P_ONU1-P2P_ONU3) et des terminaisons optiques (P2P_CT1-P2P_CT4), et supportant des canaux point-à-multi-points et une pluralité de canaux point-à-point, un même canal point-à-point étant attribué à une seule terminaison optique, ledit procédé étant mis en œuvre pour un module utilisateur dit module utilisateur demandeur, le procédé comprenant les étapes suivantes :
- détection (420) d'un signal de disponibilité prédéterminé (600) véhiculé par un canal point-à-point de ladite pluralité de canaux point-à-point ;
- allocation (430) audit module utilisateur demandeur du canal point-à-point sur lequel est véhiculé ledit signal de disponibilité prédéterminé (600), dit canal point-à-point disponible,
**caractérisé en ce que** l'étape de détection (420) comprend une étape de vérification, sur chaque canal point-à-point de ladite pluralité de canaux point-à-point, que le signal de disponibilité prédéterminé (600) est détecté, et
- en cas de vérification positive pour un seul canal point-à-point de ladite pluralité, allocation dudit seul canal point-à-point audit module utilisateur demandeur ;
- en cas de vérification positive pour un ensemble de canaux point-à-point de ladite pluralité, allocation d'un canal point-à-point audit module utilisateur demandeur sélectionné parmi ledit ensemble de canaux point-à-point, en fonction d'un critère de qualité de communication prédéterminé..

2. Procédé selon la revendication 1, dans lequel l'étape de détection (420) est déclenchée sur apparition d'une condition appartenant au groupe comprenant :
- détection d'une demande d'allocation d'un canal point-à-point ;
- détection d'un dysfonctionnement d'une terminaison optique ;
- détection d'une maintenance préprogrammée d'une terminaison optique ;
- introduction d'un nouveau module utilisateur dans le réseau ;
- introduction d'une nouvelle terminaison optique dans le réseau ;
- détection d'une demande d'un changement de canal point-à-point ;
- détection d'un niveau de qualité de communication inférieur à un seuil prédéterminé entre un module utilisateur et une terminaison optique du réseau impliqués dans un canal point-à-point de ladite pluralité.

3. Procédé selon l'une quelconque des revendications 1 ou 2, comprenant en outre, après l'étape d'allocation (430) du canal point-à-point disponible, une étape de transmission (440) sur le canal point-à-point disponible d'une requête d'utilisation du canal point-à-point disponible, à destination de la terminaison optique à laquelle est attribué ledit canal point-à-point disponible.

4. Procédé selon l'une quelconque des revendications 1 ou 2, dans lequel une entité interne au module utilisateur demandeur ou externe au module utilisateur demandeur effectue l'étape d'allocation d'un canal point-à-point.

5. Procédé d'allocation d'un canal point-à-point à un module utilisateur d'un réseau de communication optique (300), ledit réseau comprenant des modules utilisateurs (P2P_ONU1-P2P_ONU3) et des terminaisons optiques (P2P_CT1-P2P_CT4), et supportant des canaux point-à-multi-points et une pluralité de canaux point-à-point, un même canal point-à-point étant attribué à une seule terminaison optique, ledit procédé étant mis en œuvre pour chaque terminaison optique de ladite pluralité, disponible pour une connexion optique point-à-point, le procédé comprenant les étapes suivantes:
- émission (410) d'un signal de disponibilité prédéterminé (600) sur le canal point-à-point attribué à ladite terminaison optique disponible, dit canal point-à-point disponible, vers les modules utilisateurs ; et
- mise en attente d'une requête d'utilisation du canal point-à-point disponible, provenant d'un module utilisateur, dit module utilisateur demandeur,
**caractérisé en ce que** le signal de disponibilité prédéterminé (600) comprend une information appartenant au groupe comprenant :
- une information représentative d'un numéro de référence associé au canal point-à-point disponible ;
- une information représentative d'une longueur d'onde associée au canal point-à-point disponible ;
- une information représentative d'une fréquence associée au canal point-à-point disponible ;
- une information représentative d'une vitesse de modulation associée au canal point-à-point disponible.

6. Procédé selon la revendication 5, comprenant en outre les étapes suivantes, sur réception de la requête d'utilisation du canal point-à-point disponible :
- arrêt de l'émission du signal de disponibilité prédéterminé (600) sur le canal point-à-point disponible ;
- vérification de la faisabilité de l'établissement d'une communication point-à-point sur le canal point-à-point disponible entre ledit module utilisateur demandeur et ladite terminaison optique disponible.

7. Procédé selon la revendication 6, comprenant en outre les étapes suivantes :
- en cas de vérification positive, établissement d'une communication point-à-point sur le canal point-à-point disponible entre ledit module utilisateur demandeur et ladite terminaison optique disponible ;
- en cas de vérification négative, réémission du signal de disponibilité prédéterminé (600) sur le canal point-à-point disponible.

8. Procédé selon l'une quelconque des revendications 5 à 7, dans lequel le signal de disponibilité prédéterminé (600) est émis de façon continue.

9. Procédé selon l'une quelconque des revendications 5 à 7, dans lequel le signal de disponibilité prédéterminé (600) est émis de façon discontinue.

10. Produit programme d'ordinateur, comprenant des instructions de code de programme pour la mise en œuvre du ou des procédés selon au moins une des revendications 1 à 9, lorsque ledit programme est exécuté sur un ordinateur.

11. Dispositif d'allocation d'un canal point-à-point à un module utilisateur d'un réseau de communication optique (300) pour la mise en œuvre d'un procédé selon l'une des revendications 1 à 4, ledit réseau comprenant des modules utilisateurs (P2P_ONU1-P2P_ONU3) et des terminaisons optiques (P2P_CT1-P2P_CT4), et supportant des canaux point-à-multi-points et une pluralité de canaux point-à-point, un même canal point-à-point étant attribué à une seule terminaison optique, ledit dispositif étant **caractérisé en ce qu'**il comprend, pour un module utilisateur dit module utilisateur demandeur:
- des moyens de détection d'un signal de disponibilité prédéterminé (600) véhiculé par un canal point-à-point de ladite pluralité de canaux point-à-point ;
- des moyens d'allocation audit module utilisateur demandeur du canal point-à-point sur lequel est véhiculé ledit signal de disponibilité prédéterminé (600), dit canal point-à-point disponible.

12. Terminaison optique comprise dans un réseau de communication optique (300), comprenant des modules utilisateurs (P2P_ONU1-P2P_ONU3) et des terminaisons optiques (P2P_CT1-P2P_CT4) pour la mise en œuvre d'un procédé selon l'une des revendications 5 à 9, et supportant des canaux point-à-multi-points et une pluralité de canaux point-à-point, un même canal point-à-point étant attribué à une seule terminaison optique, ladite terminaison étant **caractérisé en ce qu'**elle comprend :
- des moyen d'émission d'un signal de disponibilité prédéterminé (600) sur le canal point-à-point attribué à ladite terminaison optique disponible, dit canal point-à-point disponible, vers les modules utilisateurs ; et
- des moyen de mise en attente d'une requête d'utilisation du canal point-à-point disponible provenant d'un module utilisateur, dit module utilisateur demandeur.

## Patentansprüche

1. Verfahren zur Zuweisung eines Punkt-zu-Punkt-Kanals zu einem Benutzermodul eines optischen Kommunikationsnetzes (300), wobei das Netz Benutzermodule (P2P_ONU1-P2P_ONU3) und optische Abschlüsse (P2P_CT1-P2P_CT4) umfasst und Punkt-zu-Mehrpunkt-Kanäle und eine Vielzahl von Punkt-zu-Punkt-Kanälen unterstützt, wobei ein und derselbe Punkt-zu-Punkt-Kanal einem einzigen optischen Abschluss zugeordnet ist, wobei das Verfahren für ein Benutzermodul durchgeführt wird, das anforderndes Benutzermodul genannt wird, wobei das Verfahren die folgenden Schritte umfasst:
- Detektion (420) eines vorbestimmten Verfügbarkeitssignals (600), das von einem Punkt-zu-Punkt-Kanal der Vielzahl von Punkt-zu-Punkt-Kanälen transportiert wird;
- Zuweisung (430) des Punkt-zu-Punkt-Kanals, auf dem das vorbestimmte Verfügbarkeitssignal (600) transportiert wird, verfügbarer Punkt-zu-Punkt-Kanal genannt, zu dem anfordernden Benutzermodul,
**dadurch gekennzeichnet, dass** der Schritt der Detektion (420) einen Schritt der Überprüfung auf jedem Punkt-zu-Punkt-Kanal der Vielzahl von Punkt-zu-Punkt-Kanälen umfasst, ob das vorbestimmte Verfügbarkeitssignal (600) detektiert wird, und
- im Falle einer positiven Überprüfung für einen einzigen Punkt-zu-Punkt-Kanal der Vielzahl, die Zuweisung dieses einzigen Punkt-zu-Punkt-Kanals zu dem anfordernden Benutzermodul;
- im Falle einer positiven Überprüfung für eine Menge von Punkt-zu-Punkt-Kanälen der Vielzahl, die Zuweisung eines Punkt-zu-Punkt-Kanals zu dem anfordernden Benutzermodul, der aus der Menge von Punkt-zu-Punkt-Kanälen in Abhängigkeit von einem vorbestimmten Kriterium der Kommunikationsqualität ausgewählt wurde.

2. Verfahren nach Anspruch 1, wobei der Schritt der Detektion (420) bei Auftreten einer Bedingung ausgelöst wird, die zu der Gruppe gehört, welche umfasst:
- Detektion einer Anforderung der Zuweisung eines Punkt-zu-Punkt-Kanals;
- Detektion einer Funktionsstörung eines optischen Abschlusses;
- Detektion einer vorprogrammierten Wartung eines optischen Abschlusses;
- Einführung eines neuen Benutzermoduls in das Netz;
- Einführung eines neuen optischen Abschlusses in das Netz;
- Detektion einer Anforderung einer Änderung eines Punkt-zu-Punkt-Kanals;
- Detektion eines Niveaus der Kommunikationsqualität, das niedriger als ein vorbestimmter Schwellenwert ist, zwischen einem Benutzermodul und einem optischen Abschluss des Netzes, die an einem Punkt-zu-Punkt-Kanal der Vielzahl beteiligt sind.

3. Verfahren nach einem der Ansprüche 1 oder 2, welches außerdem, nach dem Schritt der Zuweisung (430) des verfügbaren Punkt-zu-Punkt-Kanals, einen Schritt der Übertragung (440) einer Anforderung der Benutzung des verfügbaren Punkt-zu-Punkt-Kanals auf dem verfügbaren Punkt-zu-Punkt-Kanal an den optischen Abschluss, dem der verfügbare Punkt-zu-Punkt-Kanal zugeordnet ist, umfasst.

4. Verfahren nach einem der Ansprüche 1 oder 2, wobei eine bezüglich des anfordernden Benutzermoduls interne oder bezüglich des anfordernden Benutzermoduls externe Entität den Schritt der Zuweisung eines Punkt-zu-Punkt-Kanals ausführt.

5. Verfahren zur Zuweisung eines Punkt-zu-Punkt-Kanals zu einem Benutzermodul eines optischen Kommunikationsnetzes (300), wobei das Netz Benutzermodule (P2P_ONU1-P2PO_NU3) und optische Abschlüsse (P2P_CT1-P2P_CT4) umfasst und Punkt-zu-Mehrpunkt-Kanäle und eine Vielzahl von Punkt-zu-Punkt-Kanälen unterstützt, wobei ein und derselbe Punkt-zu-Punkt-Kanal einem einzigen optischen Abschluss zugeordnet ist, wobei das Verfahren für jeden optischen Abschluss der Vielzahl durchgeführt wird, der für eine optische Punkt-zu-Punkt-Verbindung verfügbar ist, wobei das Verfahren die folgenden Schritte umfasst:
- Senden (410) eines vorbestimmten Verfügbarkeitssignals (600) auf dem Punkt-zu-Punkt-Kanal, der dem verfügbaren optischen Abschluss zugeordnet ist, verfügbarer Punkt-zu-Punkt-Kanal genannt, an die Benutzermodule; und
- Versetzen in den Wartezustand einer Anforderung der Benutzung des verfügbaren Punkt-zu-Punkt-Kanals, die von einem Benutzermodul kommt, das anforderndes Benutzermodul genannt wird,
**dadurch gekennzeichnet, dass** das vorbestimmte Verfügbarkeitssignal (600) eine Information umfasst, die zu der Gruppe gehört, welche umfasst:
- eine Information, die für eine Referenznummer repräsentativ ist, die dem verfügbaren Punkt-zu-Punkt-Kanal zugeordnet ist;
- eine Information, die für eine Wellenlänge repräsentativ ist, die dem verfügbaren Punkt-zu-Punkt-Kanal zugeordnet ist;
- eine Information, die für eine Frequenz repräsentativ ist, die dem verfügbaren Punkt-zu-Punkt-Kanal zugeordnet ist;
- eine Information, die für eine Modulationsgeschwindigkeit repräsentativ ist, die dem verfügbaren Punkt-zu-Punkt-Kanal zugeordnet ist.

6. Verfahren nach Anspruch 5, welches außerdem beim Empfang der Anforderung der Benutzung des verfügbaren Punkt-zu-Punkt-Kanals die folgenden Schritte umfasst:
- Beenden des Sendens des vorbestimmten Verfügbarkeitssignals (600) auf dem verfügbaren Punkt-zu-Punkt-Kanal;
- Überprüfung der Durchführbarkeit der Einrichtung einer Punkt-zu-Punkt-Kommunikation auf dem verfügbaren Punkt-zu-Punkt-Kanal zwischen dem anfordernden Benutzermodul und dem verfügbaren optischen Abschluss.

7. Verfahren nach Anspruch 6, welches außerdem die folgenden Schritte umfasst:
- im Falle einer positiven Überprüfung die Einrichtung einer Punkt-zu-Punkt-Kommunikation auf dem verfügbaren Punkt-zu-Punkt-Kanal zwischen dem anfordernden Benutzermodul und dem verfügbaren optischen Abschluss;
- im Falle einer negativen Überprüfung das erneute Senden des vorbestimmten Verfügbarkeitssignals (600) auf dem verfügbaren Punkt-zu-Punkt-Kanal.

8. Verfahren nach einem der Ansprüche 5 bis 7, wobei das vorbestimmte Verfügbarkeitssignal (600) kontinuierlich gesendet wird.

9. Verfahren nach einem der Ansprüche 5 bis 7, wobei das vorbestimmte Verfügbarkeitssignal (600) diskontinuierlich gesendet wird.

10. Computerprogrammprodukt, welches Programmcodeanweisungen für die Durchführung des oder der Verfahren nach mindestens einem der Ansprüche 1 bis 9, wenn das Programm auf einem Computer ausgeführt wird, umfasst.

11. Vorrichtung zur Zuweisung eines Punkt-zu-Punkt-Kanals zu einem Benutzermodul eines optischen Kommunikationsnetzes (300) für die Durchführung eines Verfahrens nach einem der Ansprüche 1 bis 4, wobei das Netz Benutzermodule (P2P_ONU1-P2P_ONU3) und optische Abschlüsse (P2P_CT1-P2P_CT4) umfasst und Punkt-zu-Mehrpunkt-Kanäle und eine Vielzahl von Punkt-zu-Punkt-Kanälen unterstützt, wobei ein und derselbe Punkt-zu-Punkt-Kanal einem einzigen optischen Abschluss zugeordnet ist, wobei die Vorrichtung **dadurch gekennzeichnet ist, dass** sie für ein Benutzermodul, das anforderndes Benutzermodul genannt wird, umfasst:
- Mittel zur Detektion eines vorbestimmten Verfügbarkeitssignals (600), das von einem Punkt-zu-Punkt-Kanal der Vielzahl von Punkt-zu-Punkt-Kanälen transportiert wird;
- Mittel zur Zuweisung des Punkt-zu-Punkt-Kanals, auf dem das vorbestimmte Verfügbarkeitssignal (600) transportiert wird, verfügbarer Punkt-zu-Punkt-Kanal genannt, zu dem anfordernden Benutzermodul.

12. Optischer Abschluss, der in einem optischen Kommunikationsnetz (300) enthalten ist, das Benutzermodule (P2P_ONU1-P2P_ONU3) und optische Abschlüsse (P2P_CT1-P2P_CT4) für die Durchführung eines Verfahrens nach einem der Ansprüche 5 bis 9 umfasst und Punkt-zu-Mehrpunkt-Kanäle und eine Vielzahl von Punkt-zu-Punkt-Kanälen unterstützt, wobei ein und derselbe Punkt-zu-Punkt-Kanal einem einzigen optischen Abschluss zugeordnet ist, wobei der Abschluss **dadurch gekennzeichnet ist, dass** er umfasst:
- Mittel zum Senden eines vorbestimmten Verfügbarkeitssignals (600) auf dem Punkt-zu-Punkt-Kanal, der dem verfügbaren optischen Abschluss zugeordnet ist, verfügbarer Punkt-zu-Punkt-Kanal genannt, an die Benutzermodule; und
- Mittel zum Versetzen in den Wartezustand einer Anforderung der Benutzung des verfügbaren Punkt-zu-Punkt-Kanals, die von einem Benutzermodul kommt, das anforderndes Benutzermodul genannt wird.

## Claims

1. Method for allocating a point-to-point channel to a network unit of an optical communication network (300), said network comprising network units (P2P_ONU1-P2P_ONU3) and channel terminations (P2P_CT1-P2P_CT4), and supporting point-to-multipoint channels and a plurality of point-to-point channels, a given point-to-point channel being attributed to a single channel termination, said method being implemented for a network unit called the requesting network unit, the method comprising the following steps:
- detecting (420) a predetermined availability signal (600) conveyed by a point-to-point channel of said plurality of point-to-point channels;
- allocating (430) to said requesting network unit the point-to-point channel on which said predetermined availability signal (600) is conveyed, which channel is called the available point-to-point channel,
**characterized in that** the detecting step (420) comprises a step of verifying, for each point-to-point channel of said plurality of point-to-point channels, whether the predetermined availability signal (600) is detected, and
- in the event of positive verification for a single point-to-point channel of said plurality, allocating said single point-to-point channel to said requesting network unit;
- in the event of a positive verification for a set of point-to-point channels of said plurality, allocating to said requesting network unit a point-to-point channel selected from said set of point-to-point channels, depending on a predetermined communication quality criterion.

2. Method according to Claim 1, wherein the detecting step (420) is triggered upon occurrence of a condition belonging to the group containing:
- detection of a request to allocate a point-to-point channel;
- detection of a malfunction of a channel termination;
- detection of pre-scheduled maintenance of a channel termination;
- introduction of a new network unit into the network;
- introduction of a new channel termination into the network;
- detection of a request to change point-to-point channel;
- detection of a communication quality level below a predetermined threshold for a communication between a network unit and a network channel termination involved in one point-to-point channel of said plurality.

3. Method according to either of Claims 1 and 2, further comprising, after the step of allocating (430) the available point-to-point channel, a step of transmitting (440) over the available point-to-point channel a request to use the available point-to-point channel, to the channel termination to which said available point-to-point channel is attributed.

4. Method according to either of Claims 1 and 2, wherein an entity internal to the requesting network unit or external to the requesting network unit performs the step of allocating a point-to-point channel.

5. Method for allocating a point-to-point channel to a network unit of an optical communication network (300), said network comprising network units (P2P_ONU1-P2P_ONU3) and channel terminations (P2P_CT1-P2P_CT4), and supporting point-to-multipoint channels and a plurality of point-to-point channels, a given point-to-point channel being attributed to a single channel termination, said method being implemented for each channel termination of said plurality available for a point-to-point optical connection, the method comprising the following steps:
- transmitting (410), to the network units, a predetermined availability signal (600) over the point-to-point channel attributed to said available channel termination, which channel is called the available point-to-point channel; and
- waiting for a request to use the available point-to-point channel to be delivered by a network unit, called the requesting network unit,
**characterized in that** the predetermined availability signal (600) contains information belonging to the group containing:
- information representative of a reference number associated with the available point-to-point channel;
- information representative of a wavelength associated with the available point-to-point channel;
- information representative of a frequency associated with the available point-to-point channel;
- information representative of a modulation speed associated with the available point-to-point channel.

6. Method according to Claim 5, further comprising the following steps, on receipt of the request to use the available point-to-point channel:
- stopping transmitting the predetermined availability signal (600) over the available point-to-point channel;
- verifying the feasibility of setting up a point-to-point communication on the available point-to-point channel between said requesting network unit and said available channel termination.

7. Method according to Claim 6, further comprising the following steps:
- in the event of positive verification, setting up a point-to-point communication on the available point-to-point channel between said requesting network unit and said available channel termination;
- in the event of negative verification, retransmitting the predetermined availability signal (600) over the available point-to-point channel.

8. Method according to any of Claims 5 to 7, wherein the predetermined availability signal (600) is transmitted continuously.

9. Method according to any of Claims 5 to 7, wherein the predetermined availability signal (600) is transmitted discontinuously.

10. Computer program product, comprising program code instructions for implementing the method or methods according to at least one of Claims 1 to 9 when said program is executed on a computer.

11. Device for allocating a point-to-point channel to a network unit of an optical communication network (300) with a view to implementing a method according to any of Claims 1 to 4, said network comprising network units (P2P_ONU1-P2P_ONU3) and channel terminations (P2P_CT1-P2P_CT4), and supporting point-to-multipoint channels and a plurality of point-to-point channels, a given point-to-point channel being attributed to a single channel termination, said device being **characterized in that** it comprises, for a network unit called the requesting network unit:
- means for detecting a predetermined availability signal (600) conveyed by a point-to-point channel of said plurality of point-to-point channels;
- means for allocating to said requesting network unit the point-to-point channel on which said predetermined availability signal (600) is conveyed, which channel is called the available point-to-point channel.

12. Channel termination included in an optical communication network (300) comprising network units (P2P_ONU1-P2P_ONU3) and channel terminations (P2P_CT1-P2P_CT4) with a view to implementing a method according to any of Claims 5 to 9, and supporting point-to-multipoint channels and a plurality of point-to-point channels, a given point-to-point channel being assigned to a single channel termination, said termination being **characterized in that** it comprises:
- means for transmitting, to the network units, a predetermined availability signal (600) over the point-to-point channel attributed to said available channel termination, which channel is called the available point-to-point channel; and
- means for waiting for a request to use the available point-to-point channel to be delivered by a network unit, called the requesting network unit.
